# EUROPÄISCHE PATENTSCHRIFT

(11) **EP 3 722 768 B1**
(45) Veröffentlichungstag und Bekanntmachung des Hinweises auf die Patenterteilung: **13.09.2023**
(21) Anmeldenummer: 19167970.3
(22) Anmeldetag: 08.04.2019
(51) Int. Cl.: G01L 5/28, B60T 8/00, B60T 17/00, G01B 5/00, G01L 1/16

(54) **SENSORVORRICHTUNG ZUR ERFASSUNG VON BREMSKRÄFTEN IN EINEM FAHRZEUG UND MESSSYSTEM**
SENSOR DEVICE FOR DETECTING BRAKE FORCES IN A VEHICLE AND MEASUREMENT SYSTEM
DISPOSITIF CAPTEUR PERMETTANT DE DÉTECTER DES FORCES DE FREINAGE DANS UN VÉHICULE ET SYSTÈME DE MESURE

(43) Veröffentlichungstag der Anmeldung: 14.10.2020
(73) Patentinhaber: Joanneum Research Forschungsgesellschaft mbH, 8010 Graz (AT); Messfeld GmbH, 9020 Klagenfurt (AT); Dewesoft GmbH, 8062 Kumberg (AT)
(72) Erfinder: Zirkl, Martin, 8200 Ludersdorf-Wilfersdorf (AT); Tschepp, Andreas, 8530 Deutschlandsberg (AT); Isopp, Jutta, 9061 Klagenfurt, Wölfnitz (AT); Wernigg, Herbert, 8062 Kumberg (AT)
(74) Vertreter: Rummler, Felix

(56) Entgegenhaltungen:
- EP-A2- 0 930 597
- DE-U1-202008 005 499
- DE-U1-202015 001 850
- JP-A- 2007 224 988
- US-A1- 2009 217 768
- US-A1- 2015 005 982
- US-A1- 2015 339 001

## Beschreibung

### Gebiet der Erfindung

Die Erfindung betrifft eine Sensorvorrichtung zur Erfassung von Bremskräften in einem Fahrzeug und ein Messsytem mit einer solchen Sensorvorrichtung.

### Hintergrund

Zur Bestimmung der Bremskraft in Fahrzeugen, insbesondere in Schienenfahrzeugen, wird nach derzeit angewendeten Verfahren zunächst ein pneumatischer Druck in einer Bremsleitung des Schienenfahrzeuges bestimmt. Dies ermöglicht Rückschlüsse auf die von einem Bremsklotz auf ein Rad des Schienenfahrzeuges übertragene Bremskraft. Der Bremskraft ist ein bestimmter errechneter Bremsweg zugeordnet. Dieser wird dann durch eine Testbremsung des Schienenfahrzeuges verifiziert. Dieses Verfahren hat den Nachteil, dass nicht gewährleistet werden kann, dass jeder Bremsklotz tatsächlich hinreichend schließt und der in der Bremsleitung angelegte pneumatische Druck auch wirklich an der Bremsscheibe/dem Bremsklotz anliegt. Daher ist dieses Verfahren sehr fehleranfällig.

Neben dem oben beschriebenen Verfahren sind auch Sensorvorrichtungen zur Erfassung von Bremskräften in Schienenfahrzeugen bekannt, die als Bremsklötze oder Bremsbacken ausgebildet sind und die piezoelektrische Kraftmesszellen aufweisen. Diese Sensorvorrichtungen haben jedoch den Nachteil, dass keine Messungen am fertig servisierten, bzw. eingebauten Bremssystem möglich sind, da die Sensorvorrichtungen anstelle der Bremsklötze oder Bremsbacken in das Bremssystem eingebaut werden müssen. Daher können die eigentlichen Bremsklötze oder Bremsbacken erst nach der Messung eingebaut werden. Defekte, welche durch den finalen Einbau der Bremsklötze oder Bremsbacken entstehen, können demnach nicht detektiert werden. Eine Sensorvorrichtung zur Erfassung von Bremskräften in einem Fahrzeug mit einer piezoelektrischen Sensorfolie ist aus JP 2007 224988 A bekannt.

Die Erfindung macht es sich zur Aufgabe, eine Sensorvorrichtung bereitzustellen, die eine direkte Messung der Bremskraft ohne Ausbau oder Umbau des Bremssystems des Fahrzeuges erlaubt.

### Kurzbeschreibung der Erfindung

Diese Aufgabe wird durch die in den unabhängigen Ansprüchen angegebene Erfindung gelöst. Vorteilhafte Weiterbildungen sind den Unteransprüchen zu entnehmen.

Erfindungsgemäß geschaffen ist eine Sensorvorrichtung zur Erfassung von Bremskräften in einem Fahrzeug, umfassend eine flexible Sensorfolie zur Erfassung eines Anpressdruckes eines Bremsklotzes oder einer Bremsbacke an ein Rad oder eine Bremsscheibe des Fahrzeuges.

Die Erfindung beruht auf der Erkenntnis, dass durch den Einsatz einer flexiblen Sensorfolie eine Sensorvorrichtung zum direkten Messen von Bremskräften geschaffen werden kann. Die Sensorfolie kann zum einen hinreichend dünn sein um in einen Spalt zwischen Bremsklotz/Bremsbacke und Rad/Bremsscheibe einbringbar zu sein, zum anderen kann sie die notwendige Flexibilität aufweisen um sich z.B. einer Oberflächenbeschaffenheit des Bremsklotzes oder der Bremsbacke, insbesondere einer Rundung, anzupassen. Alternativ kann sich die Sensorvorrichtung auch einem Rad oder einer Bremsscheibe anpassen. Die Flexibilität der Sensorfolie gewährleistet, dass die Sensorvorrichtung selbst einen Kraftfluss zwischen dem Bremsklotz und dem Rad nicht beeinflusst.

Gemäß der beanspruchten Erfindung umfasst die Sensorvorrichtung eine flexible Adhäsionsfolie die mit der Sensorfolie verbunden ist, zur lösbaren Halterung der Sensorfolie auf einer dem Rad oder der Bremsscheibe zugewandten Innenseite des Bremsklotzes oder der Bremsbacke. Um die Sensorfolie an dem Bremsklotz zu fixieren ist die Sensorfolie mit einer ebenfalls flexiblen Adhäsionsfolie in Form einer Magnetfolie, verbunden . Die Magnetfolie kann die Sensorfolie durch die magnetische Haftkraft lösbar an Metallteilen, insbesondere an der Rundung eines Bremsklotzes oder an einer Bremsscheibe oder an dem Rad befestigen. Dies bewirkt, dass die Sensorvorrichtung über die gesamte Fläche des Bremsklotzes gleichmäßig anliegt. Dadurch wird verhindert, dass eine Steifigkeit der Sensorfolie, und die damit beim Schließen der Bremse einhergehenden Deformationen/Biegungen, zu Messfehlern führen. Die Sensorvorrichtung aus Sensorfolie und Magnetfolie ist hinreichend dünn und flexibel, um in Spalte zwischen Bremsklotz/Bremsbacke und Rad/Bremsscheibe einbringbar zu sein. Sie kann sich außerdem verschiedenen Oberflächen anpassen und an diesen anhaften. Dadurch ist die Sensorvorrichtung ohne Ausbau oder Modifikation eines Bremssystems und ohne Rücksicht auf den Zustand von Bremsklötzen oder -backen einsetzbar. Die Kraft, die von einem Bremsklotz auf ein Rad übertragen wird, kann direkt gemessen werden. Dadurch können Fehler, die durch indirekte Messungen oder Ein - und Umbauten nach der Messung verursacht werden, eliminiert werden. Durch die Flexibilität der Sensorvorrichtung ist die Sensorvorrichtung auch von Hand positionierbar. Dadurch ist die Sensorvorrichtung schnell und flexibel einsetzbar.

Bremsklötze und Bremsbacken sind im Sinne der Anmeldung als Vorrichtungen zu verstehen, die mit rotierenden, bzw. rotierbaren Vorrichtungen wie z.B. Bremsscheiben oder Rädern, zusammenwirken und dazu ausgebildet sind Rotationsenergie in Wärmeenergie umzuwandeln. Die Begriffe "Bremsklotz" und "Bremsbacke", sowie die Begriffe "Rad" und "Bremsscheibe" werden ihrer Funktion gemäß synonym verwendet. "Bremskraft" ist die Anpresskraft, die die Vorrichtung dabei auf die rotierende, bzw. rotierbare Vorrichtung ausübt.

In einer Ausgestaltung der Erfindung weist die Sensorfolie Druckerfassungsbereiche auf, wobei die Druckerfassungsbereiche Sensoren umfassen, die auf eine Trägerfolie aufgedruckt sind. Insbesondere sind die Sensoren piezoelektrische Sensoren. Die Sensorfolie kann als piezoelektrische Druckerfassungsfolie ausgebildet sein. Druckerfassungsfolien sind kostengünstig herstellbar, mechanisch sehr widerstandsfähig und können zur Messung sehr hoher Drücke eingesetzt werden. Solche Druckerfassungsfolien sind zum Beispiel aus der WO 2014/037016 A1 bekannt. Neben piezoelektrischen Druckerfassungsfolien können auch Druckerfassungsfolien mit FSR-Sensoren, DMS-Folien, Folien mit kapazitiven Sensoren, PVDF-Folien und Ferroelektrete als Foliensensoren eingesetzt werden.

In einer Ausgestaltung der Erfindung ist die Sensorfolie auf die Adhäsionsfolie aufgeklebt oder auflaminiert. Dadurch ist die Sensorvorrichtung günstig herstellbar, weil die Sensorfolie leicht auf eine herkömmliche Adhäsionsfolie, im Rahmen der beanspruchten Erfindung eine Magnetfolie, aufgebracht werden kann. Das Aufbringen ist maschinell durchführbar, was die Produktionskosten senkt.

Als piezoelektrische Sensorfolie kann sowohl eine mit Elektroden versehene piezoelektrische Trägerfolie (beispielsweise PVDF Folien oder Ferroelektretfolien von EMFIT) sowohl als auch ein nicht piezoelektrisches Trägermaterial mit aufgedruckten piezoelektrischen Sensoren (beispielsweise Polymer- oder Nanokompositsensoren) verstanden werden.

In einer Ausgestaltung der Erfindung weist die Sensorfolie mindestens einen Druckerfassungsbereich auf, der einer Oberfläche der Innenseite des Bremsklotzes entspricht. Der Druckerfassungsbereich, also der eigentliche Messbereich der Sensorvorrichtung, kann genau auf den Bremsklotz abgestimmt sein. Dadurch ist eine integrale Erfassung des Druckes über die gesamte Oberfläche des Bremsklotzes möglich. Dies verbessert die Messgenauigkeit, weil keine Bereiche des Bremsklotzes ausgespart werden. Die Sensorfolie, bzw. deren Druckerfassungsbereich(e) können bereits im Herstellungsprozess genau an die Oberflächen der Bremsklötze angepasst werden.

In einer Ausgestaltung der Erfindung sind die Druckerfassungsbereiche direkt auf die Adhäsionsfolie oder Klebefolie aufgedruckt. Da insbesondere piezoelektrische Foliensensoren durch Drucken einer ferroelektrischen Tinte auf ein geeignetes Trägersubstrat hergestellt werden, kann auch die Adhäsionsfolie/ Magnetfolie die Funktion des Trägersubstrates übernehmen. Dadurch können die Laminat- oder Klebeschicht eingespart werden. Ebenso kann das Trägersubstrat der Sensorfolie eingespart werden. Dadurch ist die Sensorvorrichtung noch dünner herstellbar. Dieser Vorteil ist bei allen druckbaren Sensoren realisierbar. Dies ermöglicht, dass die Sensorvorrichtung in sehr schmale Spalte zwischen Bremsklotz und Rad/ Bremsscheibe einschiebbar ist. Daher sind auch andere Anwendungen, bspw. im Automobilbereich möglich, wo zwischen Bremsscheibe und Bremsbacke noch geringere Spaltmaße üblich sind.

In einer Ausgestaltung der Erfindung umfasst die Sensorvorrichtung Kontaktvorrichtungen, insbesondere Federkontakte oder Folienkonnektoren, zum Verbinden der Sensorfolie mit einer oder mehrerer Messeinrichtungen. Die Kontaktvorrichtungen können die von der Sensorfolie gemessenen Daten abnehmen und zu geeigneten Messeinrichtungen weiterleiten. Die Kontaktvorrichtungen können dazu ausgebildet sein mittels eines Kabels kontaktierbar zu sein.

In einer Ausgestaltung der Erfindung weist die Sensorvorrichtung eine Dicke von unter 1 mm auf. Die Verwendung von Folien geringer Dicke ermöglicht es, dass die Sensorvorrichtung in den schmalen Spalt (üblicherweise ist dieser Spalt höchstens einen Millimeter groß) zwischen dem Rad eines Schienenfahrzeuges und dem Bremsklotz einschiebbar ist. Dadurch kann die Sensorvorrichtung verwendet werden, ohne dass der Bremsklotz oder andere Komponenten des Schienenfahrzeuges ausgebaut oder modifiziert werden müssen.

Gemäß der beanspruchten Erfindung ist die Adhäsionsfolie eine Magnetfolie und eine magnetische Haftkraft der Magnetfolie so bemessen, dass die Sensorvorrichtung in einem Einbauzustand in Bezug auf den Bremsklotz positionierbar ist. Die Magnetfolie kann eine magnetische Haftkraft zur Halterung der Sensorvorrichtung an dem Bremsklotz aufweisen, wobei die Halterung das Deformieren der flexiblen Sensorvorrichtung und das Halten der Sensorvorrichtung mittels der magnetischen Haftkraft an dem Bremsklotz umfasst. Die Haftkraft der Magnetfolie kann so bemessen sein, dass in einem Betriebs- oder Einbauzustand der Sensorvorrichtung, also wenn die Sensorvorrichtung deformiert und an dem Bremsklotz gehalten ist, noch eine manuelle Positionierung der Sensorvorrichtung in Bezug auf den Bremsklotz möglich ist. Dies hat den Vorteil, dass der Druckerfassungsbereich der Sensorfolie exakt mit der Oberfläche des Bremsklotzes in Übereinstimmung bringbar ist. Dadurch können positionsbedingte Messfehler schnell und manuell behoben werden.

Gemäß einem weiteren Aspekt der Erfindung ist ein Messsystem zur Messung von Bremskräften in einem Fahrzeug geschaffen, das Messsystem umfassend: mindestens eine Sensorvorrichtung nach dem ersten Aspekt der Erfindung, mindestens eine Messeinrichtung zum Empfangen von Messdaten von der mindestens einen Sensorvorrichtung, wobei jede Messeinrichtung mit mindestens einer Sensorvorrichtung verbunden ist, und eine zentrale Recheneinheit, zum Auswerten der von der mindestens einen Messeinrichtung empfangenen Messdaten. Das Messsystem ermöglicht eine Bremsbelagskraft- und Sohlenkraftmessung ohne Ausbau der Beläge oder Klötze und die Übertragung der Messergebnisse sowie deren Auswertung durch eine zentrale Recheneinheit. Die Messung kann dabei an neuen und abgenutzten Bremsscheiben bzw. Bremsklötzen erfolgen und ist ohne Ausbau der Bremsklötze im Zuge einer planmäßigen Instandhaltung der Fahrzeuge an einer Vielzahl von Messstellen gleichzeitig möglich. Die Messdaten können kabellos oder kabelgebunden an eine oder mehrere Messeinrichtungen übertragen werden. Die übermittelten Messdaten können in einer Datenbank gespeichert werden. Dabei sind Rüstzeiten gering und der Messaufbau und die Messung sind schnell und einfach (Zeitfenster < 4 Stunden) durchführbar.

In einer Ausgestaltung des Messsystems sind einer Messeinrichtung jeweils mindestens eine erste und mindestens eine zweite Sensorvorrichtung zugeordnet. Insbesondere sind die ersten Sensorvorrichtungen einem ersten Rad einer Achse des Fahrzeuges und die zweiten Sensorvorrichtungen einem zweiten Rad der Achse des Fahrzeuges zugeordnet. Diese Anordnung ermöglicht parallele, pro Achse zusammengefasste Kraftmessungen. Es können mehrere parallele Messungen durchgeführt werden, wobei mehrere zusammengefasste Messeinrichtungen parallel in Betrieb sein können (z.B. in dem Fall, in dem ein Rad zwei Bremsklötze aufweist).

In einer Ausgestaltung des Messsystems weist jede Messeinrichtung eine Schnittstelle zum drahtlosen Verbinden der Messeinrichtung mit der zentralen Recheneinheit auf. Die Messdaten die die Messeinrichtungen von den ihnen zugeordneten Sensorvorrichtungen empfangen, können dadurch ohne Verkabelung an die zentrale Recheneinheit übertragen werden. Dadurch kann der Montageaufwand des Messsystems reduziert und somit die Zeit in der das Messsystem installiert oder deinstalliert wird, reduziert werden.

Gemäß einem weiteren Aspekt der Erfindung ist eine Verwendung einer flexiblen Sensorfolie in einer Sensorvorrichtung zur Erfassung von Bremskräften in Fahrzeugen geschaffen.

### Kurze Beschreibung der Zeichnungen

Anhand der beigefügten Zeichnungen sind beispielhafte Ausführungsformen der Erfindung näher beschrieben. Es zeigt
die Figur 1 eine Messanordnung zur Durchführung eines Verfahrens zur Bremskraftbestimmung aus dem Stand der Technik; die Figur 2 eine Sensorvorrichtung aus dem Stand der Technik;
die Figur 3 eine beispielhafte Anordnung umfassend eine Sensorvorrichtung gemäß der Erfindung;
die Figur 4 eine schematische Schnittdarstellung durch eine beispielhafte Sensorvorrichtung gemäß der Erfindung; und
die Figur 5 eine schematische Darstellung eines Messsystems gemäß der Erfindung.

### Figurenbeschreibung

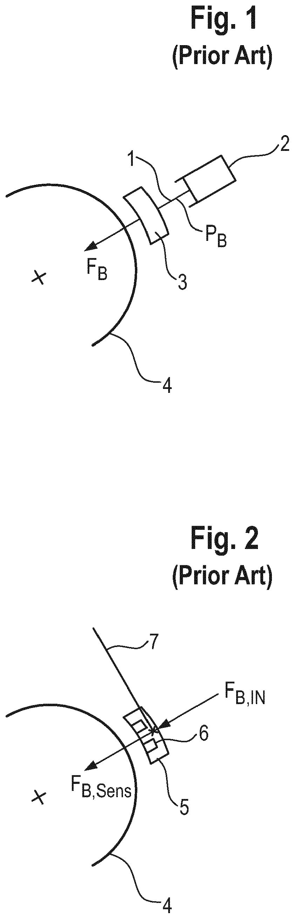

Figur 1 zeigt eine Anordnung aus dem Stand der Technik zur Messung eines Druckes P_{B} in einer Bremsleitung 1 eines Schienenfahrzeuges. Durch einen Druckzylinder 2 wird in der Bremsleitung ein Hydraulikdruck aufgebaut, der den Bremsklotz 3 gegen das Rad 4 drückt. Dieser Druck P_{B} wird gemessen. Die Bremskraft F**_{B}** mit der der Bremsklotz 3 gegen das Rad 4 gedrückt wird, ist eine Funktion des Druckes P_{B}. Die so ermittelte Kraft F**_{B}** entspricht einem bestimmten Bremsweg. Im Wege einer Testbremsung wird überprüft, ob dieser Bremsweg eingehalten wird. Ist dies der Fall, wird davon ausgegangen, dass F**_{B}** ausreichend groß ist.

Figur 2 zeigt eine Sensorvorrichtung 5 mit Kraftmesszellen 6 aus dem Stand der Technik. Die Sensorvorrichtung 5 ist anstelle eines Bremsklotzes 3 in ein Bremssystem des Schienenfahrzeuges montiert. Eine Kraft F**_{B,IN}** wird über eine Kraftübertragungsvorrichtung 7, insbesondere einem Scherenhebelgestänge, auf die Sensorvorrichtung 5 übertragen. Die Sensorvorrichtung 5 überträgt die Kraft F**_{B,IN}** auf das Rad 4. Die Messzellen 6 messen die von der Sensorvorrichtung 5 auf das Rad 4 übertragene Kraft F**_{B,Sense}.**

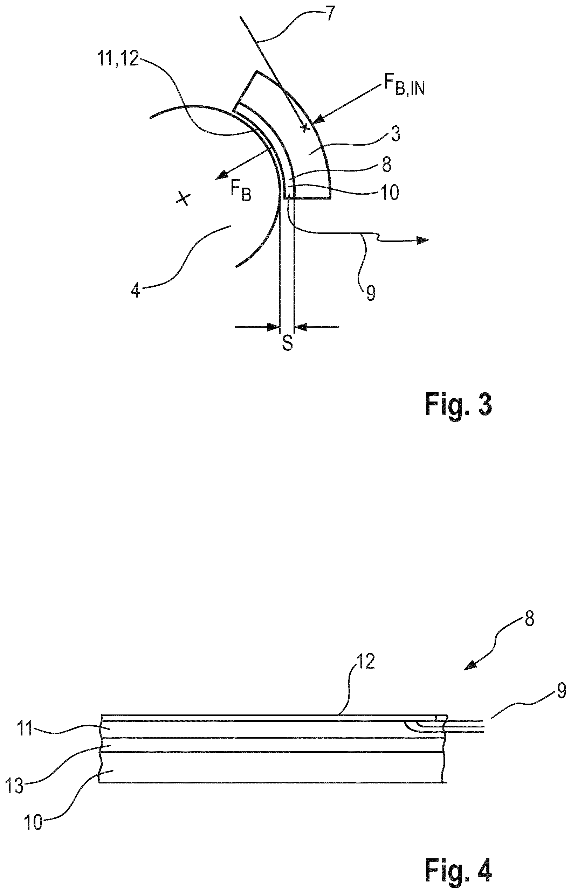

Figur 3 zeigt eine Anordnung umfassend eine Sensorvorrichtung 8 gemäß der Erfindung. Die Sensorvorrichtung 8 ist in einen Spalt S zwischen dem Rad 4 und dem Bremsklotz 3 eingebracht und haftet an einer dem Rad 4 zugewandten Innenseite des Bremsklotzes 3 an. Die Sensorvorrichtung 8 ist flexibel verformbar und fügt sich an die Rundung der Innenseite des Bremsklotzes 3 an. Das Spaltmaß des Spaltes S beträgt weniger als 1 mm. Die Sensorvorrichtung 8 weist eine Kontaktvorrichtung 9 auf. Die Kontaktvorrichtung 9 ist mit einer Messeinrichtung (nicht dargestellt) gekoppelt. Mittels der Kontaktvorrichtung 9 werden die von der Sensorvorrichtung 8 gemessenen Daten (über geeignete Übertragungsmedien, z.B. Kabel) zu der Messeinrichtung übertragen. Die Sensorvorrichtung ist mittels einer flexiblen Magnetfolie 10 an dem Bremsklotz 3 befestigt. Die Haftkraft der Magnetfolie 10 ist so gewählt, dass die Sensorvorrichtung 8 manuell positionierbar ist. Die Sensorvorrichtung 8 weist an ihrer in einem Einbauzustand dem Rad 4 zugewandten Seite eine flexible, piezoelektrische Sensorfolie 11 auf. Die Sensorfolie 11 weist einen Druckerfassungsbereich 12 auf, dessen Ausdehnung der Oberfläche der Innenseite des Bremsklotzes 3, also derjenigen Fläche des Bremsklotzes 3 über welche die Bremskraft auf das Rad 4 übertragen wird, entspricht. In einem Betriebszustand ist die Sensorvorrichtung in den Spalt S eingebracht und haftet an der Innenseite des Bremsklotzes 3 an. Wird eine Kraft F**_{B,IN}** über die Kraftübertragungsvorrichtung 7 auf den Bremsklotz 3 übertragen und dieser in Folge dessen gegen das Rad 4 gedrückt, misst die Sensorfolie 11 mittels der Druckerfassungsbereiche 12 einen Anpressdruck zwischen dem Bremsklotz 3 und dem Rad 4. Der Anpressdruck ist ein direktes Maß für die tatsächlich auf das Rad 4 übertragene Bremskraft F**_{B}**.

Figur 4 zeigt eine schematische Schnittdarstellung durch eine Sensorvorrichtung 8 gemäß der Erfindung. Die Sensorvorrichtung 8 umfasst die flexible, piezoelektrische Sensorfolie 11. Die Sensorfolie 11 weist eine Druckerfassungsbereich 12 auf. Die Sensorfolie 11 ist auf die Magnetfolie 10 aufgeklebt oder auflaminiert und umfasst hierzu eine Laminations- oder Klebeschicht 13. Die Sensorvorrichtung 8 ist insgesamt flexibel und dadurch an Bremsklötze 3 oder Bremsbacken anformbar. Die Sensorvorrichtung 8 umfasst Folienkonnektoren 9, die die Druckerfassungsbereiche 12 der Sensorfolie 11 mit einer Messeinrichtung (nicht dargestellt) verbinden. Die Sensorfolie 11 umfasst ein Trägersubtrat auf dem eine ferroelektrische Tinte aufgedruckt ist und eine erste Sensorschicht bildet, sowie eine Leitschicht, die über der ersten Sensorschicht gebildet ist.

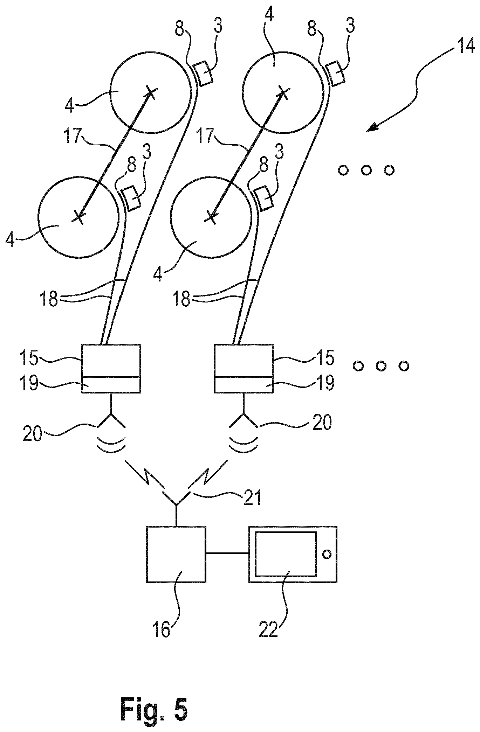

Figur 5 zeigt eine schematische Darstellung eines Messsystems 14 gemäß der Erfindung. Das Messsystem 14 umfasst mehrere Sensorvorrichtungen 8, mehrere Messeinrichtungen 15 und eine zentrale Recheneinheit 16. An jedem Bremsklotz 3 des Schienenfahrzeuges ist eine Sensorvorrichtung 8 befestigt. Die Sensorvorrichtungen 8 die an den Rädern jeweils einer Achse 17 des Schienenfahrzeuges befestigt sind zusammengefasst und mit Kabeln 18 mit den Messeinrichtungen 15 verbunden. Die Messeinrichtungen 15 weisen Schnittstellen 19 zum drahtlosen Verbinden der Messeinrichtungen mit der zentralen Recheneinheit 16 auf. Die Schnittstellen 19 umfassen Sendeeinrichtungen 20. Die zentrale Recheneinheit 16 umfasst eine Empfangsvorrichtung 21 um Messdaten (die die Bremskräfte repräsentieren) von den Messeinrichtungen 15 zu empfangen. Die zentrale Recheneinheit 16 umfasst ferner eine Anzeige- und Eingabevorrichtung 22.

### Bezugszeichenliste

- 1: Bremsleitung
- 2: Druckzylinder
- 3: Bremsklotz/Bremsbacke
- 4: Rad
- 5: Sensorvorrichtung
- 6: Kraftmesszellen
- 7: Kraftübertragungsvorrichtung
- 8: Sensorvorrichtung
- 9: Kontaktvorrichtung
- 10: Adhäsionsfolie/Magnetfolie
- 11: piezoelektrische Sensorfolie
- 12: Druckerfassungsbereiche
- 13: Laminations-/Klebeschicht
- 14: Messsystem
- 15: Messeinrichtungen
- 16: zentrale Recheneinheit
- 17: Achse
- 18: Kabel
- 19: Schnittstellen
- 20: Sendeeinrichtungen
- 21: Empfangsvorrichtungen
- 22: Anzeige-/Eingabevorrichtung

## Patentansprüche

1. Sensorvorrichtung (8) zur Erfassung von Bremskräften in einem Fahrzeug, umfassend:
eine flexible Sensorfolie (11) zur Erfassung eines Anpressdruckes eines Bremsklotzes (3) oder einer Bremsbacke an ein Rad (4) oder eine Bremsscheibe des Fahrzeuges, und
eine flexible Adhäsionsfolie , die mit der Sensorfolie (11) verbunden ist, zur lösbaren Halterung der Sensorfolie (11) auf einer dem Rad (4) oder der Bremsscheibe zugewandten Innenseite des Bremsklotzes (3) oder der Bremsbacke,
**dadurch gekennzeichnet, dass**
die Adhäsionsfolie eine Magnetfolie (10) ist und eine magnetische Haftkraft der Magnetfolie (10) so bemessen ist, dass die Sensorvorrichtung (8) in einem Einbauzustand in Bezug auf den Bremsklotz (3) oder die Bremsbacke positionierbar ist.

2. Sensorvorrichtung (8) nach Anspruch 1, wobei die Sensorfolie eine Trägerfolie und Druckerfassungsbereiche umfasst, wobei die Druckerfassungsbereiche Sensoren umfassen, die auf die Trägerfolie aufgedruckt sind.

3. Sensorvorrichtung (8) nach Anspruch 2, wobei die Sensoren piezoelektrische Sensoren sind.

4. Sensorvorrichtung (8) nach einem der vorhergehenden Ansprüche, wobei die Sensorfolie (11) auf die Adhäsionsfolie aufgeklebt oder auflaminiert ist.

5. Sensorvorrichtung (8) nach einem der vorhergehenden Ansprüche, wobei die Sensorfolie (11) mindestens einen Druckerfassungsbereich (12) aufweist, der einer Oberfläche der Innenseite des Bremsklotzes (3) oder der Bremsbacke entspricht.

6. Sensorvorrichtung (8) nach Anspruch 1, wobei der Druckerfassungsbereich (12) direkt auf die Adhäsionsfolie aufgedruckt ist.

7. Sensorvorrichtung (8) nach einem der vorhergehenden Ansprüche, umfassend Kontaktvorrichtungen (9), insbesondere Federkontakte oder Folienkonnektoren, zum Verbinden der Sensorfolie (11) mit einer oder mehrerer Messeinrichtungen (15) .

8. Sensorvorrichtung (8) nach einem der vorhergehenden Ansprüche, aufweisend eine Dicke von unter 1 mm.

9. Messsystem (14) zur Messung von Bremskräften in einem Fahrzeug, umfassend:
mindestens eine Sensorvorrichtung (8) nach einem der Ansprüche 1-8;
mindestens eine Messeinrichtung (15) zum Empfangen von Messdaten von der mindestens einen Sensorvorrichtung (8), wobei jede Messeinrichtung (15) mit mindestens einer Sensorvorrichtung (8) verbunden ist; und
eine zentrale Recheneinheit (16), zum Auswerten der von der mindestens einen Messeinrichtung (15) empfangenen Messdaten.

10. Messsystem (14) nach Anspruch 9, wobei einer Messeinrichtung (15) jeweils mindestens eine erste und mindestens eine zweite Sensorvorrichtung (8) zugeordnet sind, wobei die ersten Sensorvorrichtungen (8) einem ersten Rad (4) einer Achse (17) des Fahrzeuges und die zweiten Sensorvorrichtungen (8) einem zweiten Rad (4) der Achse des Fahrzeuges zugeordnet sind.

11. Messsystem (14) nach Anspruch 9, wobei jede Messeinrichtung (15) eine Schnittstelle (19) zum drahtlosen Verbinden der Messeinrichtung (15) mit der zentralen Recheneinheit (16) aufweist.

12. Verwendung einer Sensorvorrichtung (8) nach einem der Ansprüche 1 bis 8 zur Erfassung von Bremskräften in Fahrzeugen.

## Claims

1. Sensor device (8) for detecting braking forces in a vehicle, comprising:
a flexible sensor film (11) for detecting contact pressure of a brake pad (3) or brake shoe on a wheel (4) or a brake disc of the vehicle, and
a flexible adhesive film which is connected to the sensor film (11) for detachably holding the sensor film (11) on an inner side of the brake pad (3) or brake shoe facing the wheel (4) or brake disc,
**characterised in that** the adhesive film is a magnetic film (10) and a magnetic adhesive force of the magnetic film (10) is of such a magnitude that the sensor device (8) can be positioned in an installed state in relation to the brake pad (3) or brake shoe.

2. Sensor device (8) as claimed in claim 1, wherein the sensor film includes a backing film and pressure detecting regions, wherein the pressure detecting regions include sensors which are printed onto the backing film.

3. Sensor device (8) as claimed in claim 2, wherein the sensors are piezoelectric sensors.

4. Sensor device (8) as claimed in any one of the preceding claims, wherein the sensor film (11) is adhered or laminated onto the adhesive film.

5. Sensor device (8) as claimed in any one of the preceding claims, wherein the sensor film (11) comprises at least one pressure detecting region (12) which corresponds to a surface of the inner side of the brake pad (3) or brake shoe.

6. Sensor device (8) as claimed in claim 1, wherein the pressure detecting region (12) is printed directly onto the adhesive film.

7. Sensor device (8) as claimed in any one of the preceding claims, including contact devices (9), in particular spring contacts or film connectors, in order to connect the sensor film (11) to one or more measuring means (15).

8. Sensor device (8) as claimed in any one of the preceding claims, having a thickness of less than 1 mm.

9. Measuring system (14) for measuring braking forces in a vehicle, including:
at least one sensor device (8) as claimed in any one of claims 1-8;
at least one measuring means (15) for receiving measurement data from the at least one sensor device (8), wherein each measuring means (15) is connected to at least one sensor device (8); and
a central computing unit (16) for evaluating the measurement data received from the at least one measuring means (15).

10. Measuring system (14) as claimed in claim 9, wherein at least one first and at least one second sensor device (8) are each allocated to a measuring means (15), wherein the first sensor devices (8) are allocated to a first wheel (4) of an axle (17) of the vehicle and the second sensor devices (8) are allocated to a second wheel (4) of the axle of the vehicle.

11. Measuring system (14) as claimed in claim 9, wherein each measuring means (15) comprises an interface (19) for wirelessly connecting the measuring means (15) to the central computing unit (16).

12. Use of a sensor device (8) as claimed in any one of claims 1 to 8 for detecting braking forces in vehicles.

## Revendications

1. Dispositif de capteur (8) destiné à détecter des forces de freinage dans un véhicule, comprenant :
un film capteur flexible (11) destiné à détecter une pression de contact d'un patin de frein (3) ou d'une mâchoire de frein sur une roue (4) ou un disque de frein du véhicule, et
un film adhésif flexible, lequel est relié au film capteur (11), destiné à maintenir de manière détachable le film capteur (11) sur une face interne, tournée vers la roue (4) ou le disque de frein, du patin de frein (3) ou de la mâchoire de frein,
**caractérisé en ce que** le film adhésif est un film magnétique (10) et une force d'adhésion magnétique du film magnétique (10) est mesurée de sorte que le dispositif de capteur (8) peut être positionné dans un état de montage par rapport au patin de frein (3) ou à la mâchoire de frein.

2. Dispositif de capteur (8) selon la revendication 1, dans lequel le film capteur comprend un film porteur et des zones de détection de pression, dans lequel les zones de détection de pression comprennent des capteurs qui sont imprimés sur le film porteur.

3. Dispositif de capteur (8) selon la revendication 2, dans lequel les capteurs sont des capteurs piézoélectriques.

4. Dispositif de capteur (8) selon l'une quelconque des revendications précédentes, dans lequel le film capteur (11) est collé ou laminé sur le film adhésif.

5. Dispositif de capteur (8) selon l'une quelconque des revendications précédentes, dans lequel le film capteur (11) comporte au moins une zone de détection de pression (12) correspondant à une surface de la face interne du patin de frein (3) ou de la mâchoire de frein.

6. Dispositif de capteur (8) selon la revendication 1, dans lequel la zone de détection de pression (12) est directement imprimée sur le film adhésif.

7. Dispositif de capteur (8) selon l'une quelconque des revendications précédentes, comprenant des dispositifs de mise en contact (9), en particulier des contacts à ressort ou des films connecteurs, destinés à relier le film capteur (11) à un ou plusieurs moyens de mesure (15).

8. Dispositif de capteur (8) selon l'une quelconque des revendications précédentes, comportant une épaisseur inférieure à 1 mm.

9. Système de mesure (14) destiné à mesurer des forces de freinage dans un véhicule, comprenant :
au moins un dispositif de capteur (8) selon l'une quelconque des revendications 1-8 ;
au moins un moyen de mesure (15) destiné à recevoir des données de mesures de l'au moins un dispositif de capteur (8), dans lequel chaque moyen de mesure (15) est relié à au moins un dispositif de capteur (8) ; et
une unité de calcul centrale (16) destinée à évaluer les données de mesure reçues de l'au moins un moyen de mesure (15).

10. Système de mesure (14) selon la revendication 9, dans lequel au moins un premier et au moins un deuxième dispositif de capteur (8) sont respectivement associés à un moyen de mesure (15), dans lequel les premiers dispositifs de capteur (8) sont associés à une première roue (4) d'un essieu (17) du véhicule et les deuxièmes dispositifs de capteur (8) sont associés à une deuxième roue (4) de l'essieu du véhicule.

11. Système de mesure (14) selon la revendication 9, dans lequel chaque moyen de mesure (15) comporte une interface (19) destinée à la liaison sans fil du moyen de mesure (15) avec l'unité de calcul centrale (16).

12. Utilisation d'un dispositif de capteur (8) selon l'une quelconque des revendications 1 à 8 afin de détecter des forces de freinage dans des véhicules.
